# EUROPÄISCHE PATENTANMELDUNG

(11) **EP 4 817 394 A1**
(43) Veröffentlichungstag der Anmeldung: **07.10.2026**
(21) Anmeldenummer: 26161324.4
(22) Anmeldetag: 27.02.2026
(51) Int. Cl.: A01D 41/12, A01F 12/40

(54) **SELBSTFAHRENDER MÄHDRESCHER**

(30) Priorität: 04.04.2025 DE 102025113210
(71) Anmelder: CLAAS Selbstfahrende Erntemaschinen GmbH, 33428 Harsewinkel (DE)
(72) Erfinder: Brems, Matthias, 85072 Eichstätt (DE)
(74) Vertreter: CLAAS Gruppe

(57) **Zusammenfassung**

Die Erfindung betrifft einen selbstfahrender Mähdrescher (1), umfassend eine Häckselvorrichtung (24) mit einer rotierenden Messertrommel (26) und eine der Häckselvorrichtung (24) nachgeordnete Verteilvorrichtung (25), wobei die Verteilvorrichtung (25) einen Mittenkeil (36) zur Aufteilung eines aus der Häckselvorrichtung (24) austretenden Häckselgutstroms (44) in zwei Teilströme umfasst und die Messertrommel (26) einseitig geschliffene Häckselmesser (28) aufweist, wobei in einem vor dem Mittenkeil (36) befindlichen Bereich die links von der Keilmitte (37) befindlichen Häckselmesser (28) nach links fördernd und die rechts von der Keilmitte (37) befindlichen Häckselmesser (28) nach rechts fördernd ausgerichtet sind.

## Beschreibung

Die Erfindung betrifft einen selbstfahrenden Mähdrescher gemäß dem Oberbegriff des Anspruchs 1.

Der Mähdrescher umfasst eine Häckselvorrichtung mit einer der Häckselvorrichtung prozesstechnisch nachgeordneten Verteilvorrichtung. Der Häckselvorrichtung wird von einer sogenannten Abscheidevorrichtung Stroh zugeführt, wobei innerhalb der Häckselvorrichtung das Stroh von auf einer Messertrommel angeordneten Häckselmessern kleingehäckselt wird. Das kleingehäckselte Stroh wird anschließend mittels der Verteilvorrichtung auf den Boden verstreut.

Ein derartiger selbstfahrender Mähdrescher mit einer Häcksel- und Verteilvorrichtung ist aus der DE 10 2020 132 553 A1 bekannt geworden. Die Häckselvorrichtung umfasst eine Vielzahl von einseitig geschliffenen Häckselmessern, die auf der Mantelfläche der Trommel angeordnet sind. Die Schliffflächen der einseitig geschliffenen Häckselmesser lenken das Stroh im Betriebszustand seitlich ab. Um eine Anpassung einer Breitenverteilung des aus der Häckselvorrichtung austretenden, gehäckselten Strohs zu erreichen, offenbart die DE 10 2020 132 553 A1 eine Anordnung der Häckselmesser in drei neutral ausgerichtete Förderzonen und zwei jeweils das Erntegut nach außen ablenkende Zwischenzonen. Hierbei wird eine neutral ausgerichtete Förderzone dadurch ausgebildet, dass die Schliffflächen von benachbart zueinander angeordneten Häckselmesser in entgegengesetzte Richtungen ausgerichtet sind. Dadurch wird die durch die Schliffflächen erzeugte Ablenkung des Häckselguts innerhalb der neutral ausgerichteten Förderzonen im Wesentlichen neutralisiert. In den ablenkenden Zwischenzonen sind die Schliffflächen benachbarter Häckselmesser in die gleiche Richtung ausgerichtet, wobei sich eine stärkere Ablenkung das gehäckselten Strohs ergibt.

Nachteilig an der Anordnung der Häckselmesser gemäß der DE 10 2020 132 553 A1 ist, dass eine neutral ausgerichtete Förderzone in einem Mittenbereich der Trommel vorgesehen ist. Hierbei kann zwar eine verbesserte Breitenverteilung des aus der Häckselvorrichtung austretenden Häckselgutstroms erreicht werden, jedoch wirkt sich eine derartige Breitenverteilung negativ auf die Erntegutzuführung hin zu der Verteilvorrichtung aus. Insbesondere bei einer als Radialverteiler ausgebildeten Verteilvorrichtung mit einem Mittenkeil können sich gehäckselte Erntegutbestandteile und Stroh zwischen dem Mittenkeil und der Messertrommel festsetzen. Der Materialaufbau bewirkt eine Verschlechterung des Abgabeverhalten der Messertrommel in den nachgeschalteten Radialverteiler, insbesondere in der Mitte, wo der abgegebene Gutstrom auf die Keilspitze des Mittenkeils auftritt. Demzufolge kann Häckselgut von der Messertrommel im Kreis gefördert und in Richtung der Abscheidevorrichtung abgegeben werden. Mithin ergibt sich zusätzlich ein verschlechtertes Erntegutannahmeverhalten der Häckselvorrichtung, wobei ein Gutstau zwischen der Häckselvorrichtung und der Abscheidevorrichtung begünstigt wird.

Ausgehend von dem vorstehend genannten Stand der Technik liegt der vorliegenden Erfindung die Aufgabe zugrunde, einen selbstfahrenden Mähdrescher der eingangs genannten Art weiterzubilden, welcher insbesondere eine Weiterbildung der Häckselvorrichtung zur Verbesserung des Gutflusses aufweist.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein selbstfahrender Mähdrescher vorgeschlagen, umfassend eine Häckselvorrichtung mit einer rotierenden Messertrommel und eine der Häckselvorrichtung nachgeordnete Verteilvorrichtung, wobei die Verteilvorrichtung einen Mittenkeil zur Aufteilung eines aus der Häckselvorrichtung austretenden Gutstroms in zwei Teilströme umfasst und die Messertrommel einseitig geschliffene Häckselmesser aufweist, wobei in einem vor dem Mittenkeil befindlichen Bereich die links von der Keilmitte befindlichen Häckselmesser nach links fördernd und die rechts von der Keilmitte befindlichen Häckselmesser nach rechts fördernd ausgerichtet sind.

Die Häckselmesser sind in dem vor dem Mittenkeil befindlichen Bereich derart angeordnet, sodass diese auf den Häckselgutstrom eine von der Keilmitte weg gerichtete Förderwirkung ausüben. Demnach wird der Mittenkeil mit einer geringeren Menge Häckselgut beaufschlagt, sodass ein Aufbau von Ablagerung vermieden wird. Zugleich wird der Gutfluss zwischen der Häckselvorrichtung und dem Mittenkeil verbessert.

Eine vorteilhafte Weiterbildung sieht vor, dass die auf der Messertrommel angeordneten Häckselmesser in sich in Längsrichtung der Messertrommel erstreckenden Reihen angeordnet sind, wobei in dem vor dem Mittenkeil befindlichen Bereich die Reihen jeweils zumindest zwei, vorzugsweise zumindest drei benachbarte Häckselmesser umfassen, die nach links fördernd ausgerichtet sind und jeweils zumindest zwei, vorzugsweise zumindest drei benachbarte Häckselmesser umfassen, die nach rechts fördernd ausgerichtet sind. Diese Anordnung erreicht eine besonders vorteilhafte Anpassung der Förderwirkung der Häckseltrommel an die Breite des Mittenkeils.

Eine weitere vorteilhafte Weiterbildung sieht vor, dass in Rotationsrichtung der Messertrommel betrachtet die Häckselmesser aufeinander folgender Reihen alternierend zueinander angeordnet sind, wobei auf eine Reihe, die in dem vor dem Mittenkeil befindlichen Bereich zumindest zwei, vorzugsweise zumindest drei nach links und zumindest zwei, vorzugsweise zumindest drei nach rechts fördernd ausgerichtete Häckselmesser umfasst, eine Reihe mit zumindest drei, vorzugsweise zumindest vier nach links und/oder zumindest drei, vorzugsweise zumindest vier nach rechts fördernd ausgerichteten Häckselmessern folgt. Diese vorteilhafte Weiterbildung erreicht eine weitere Verbesserung des Gutflusses. Insbesondere kann ein verbessertes Annahmeverhalten der Häckselvorrichtung erreicht und Verwirbelungen vor der Häckselvorrichtung entgegengewirkt werden.

Gemäß einer vorteilhaften Ausgestaltung kann die Verteilvorrichtung zwei Rotoren umfassen, wobei der Mittenkeil zwischen den Rotoren angeordnet ist.

Gemäß einer weiteren vorteilhaften Ausgestaltung können die vor den Rotoren befindlichen Häckselmesser der jeweiligen Reihen alternierend zueinander angeordnet sein, so dass benachbarte Häckselmesser einer Reihe in entgegengesetzte Richtungen fördernd ausgerichtet sind. Hierdurch kann die Förderwirkung benachbarter Häckselmesser in den vor den Rotoren befindlichen Bereichen sich gegenseitig entgegenwirken, sodass der Häckselgutstrom eine geringe Ablenkung erfährt und hin zu den Rotoren geleitet wird.

Um ein besonders vorteilhaftes Übergabeverhalten des Häckselgutstroms an die Häckselvorrichtung zu erreichen, können die vor dem Rotor befindlichen, alternierend zueinander angeordneten Häckselmesser ausgehend von den zumindest zwei, vorzugsweise zumindest drei links fördernd ausgerichteten Häckselmessern bis hin zu einer linken Stirnseite angeordnet sein und von den zumindest zwei, vorzugsweise zumindest drei rechts fördernd ausgerichteten Häckselmessern bis hin zu einer rechten Stirnseite der Messertrommel angeordnet sein.

Vorzugsweise kann die Trommel eine Vielzahl von Befestigungslaschen umfassen, wobei die Häckselmesser jeweils paarweise an einer Befestigungslasche angeordnet sind. Weiter vorzugsweise können die Häckselmesser spiegelsymmetrisch ausgebildet sein, wobei die Häckselmesser vorzugsweise einen trapezförmige Querschnittsfläche aufweisen.

Die vorliegende Erfindung wird nachstehend anhand eines in den Zeichnungen dargestellten Ausführungsbeispiels näher erläutert. Es zeigen:
- Figur 1: eine schematische und exemplarische Darstellung eines selbstfahrenden Mähdreschers in Seitenansicht;
- Figur 2: schematisch und exemplarisch eine Häckselvorrichtung mit einer der Häckselvorrichtung prozesstechnisch nachgeordneten Verteilvorrichtung;
- Figur 3: schematisch und exemplarisch ein Häckselmesser zur Verwendung in einer Häckselvorrichtung gemäß Figur 2;
- Figur 4: schematisch und exemplarisch eine paarweise Anordnung von Häckselmessern.

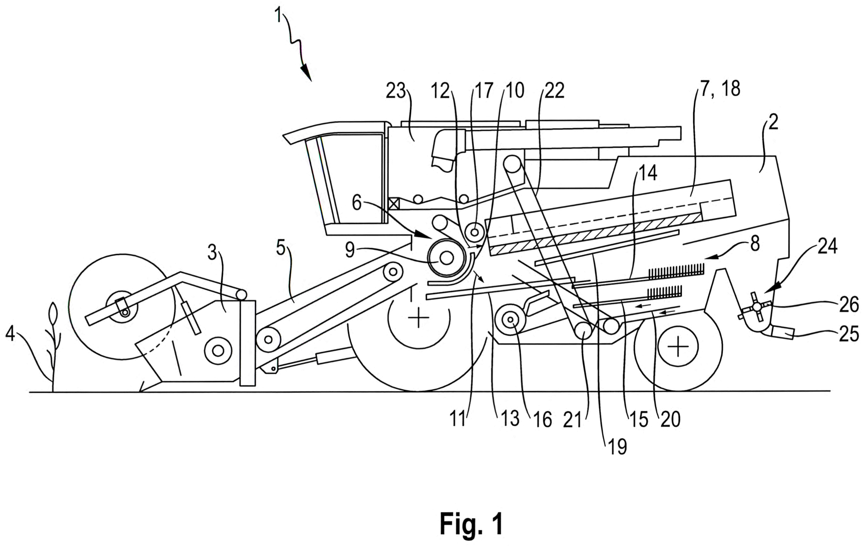

Fig. 1 zeigt eine schematische Darstellung eines selbstfahrenden Mähdreschers 1 in Seitenansicht. Der Mähdrescher 1 weist ein mit einem Fahrwerk verbundenes Traggestell auf, auf dem ein mehrteiliges Maschinengehäuse 2 befestigt ist. Der Mähdrescher 1 nimmt mit einem Vorsatzgerät 3 in an sich bekannter Weise Erntegut 4 von einem Feld auf.

Das aufgenommene Erntegut 4 wird über einen Schrägförderer 5 einer Dresch- und Trenneinrichtung übergeben. Die Dresch- und Trenneinrichtung umfasst eine nach dem Tangentialflussprinzip arbeitende Dreschvorrichtung 6, eine der Dreschvorrichtung 6 nachgeordnete Abscheideeinrichtung 7 und eine Siebanordnung 8 als Teil einer Reinigungsvorrichtung des Mähdreschers 1.

In der Dreschvorrichtung 6 wird das Erntegut 4 zwischen zumindest einer Dreschtrommel 9 und einem diese wenigstens teilweise ummantelnden Dreschkorb 10 hindurchgeführt und in zumindest zwei Teilströme 11, 12 getrennt. Der erste Teilstrom 11 besteht im Wesentlichen aus Körnern, Kurzstroh und Spreu und wird über einen Vorbereitungsboden 13 der aus einem Obersieb 14 und einem Untersieb 15 bestehenden Siebanordnung 8 zugeführt. Ein Reinigungsgebläse 16 generiert einen Luftstrom, welcher die Siebe 14, 15 durchsetzt.

Der im rückwärtigen Bereich der Dreschvorrichtung 6 aus diesem austretende weitere, im Wesentlichen aus Halmgut, insbesondere Stroh und einem Restkornanteil, bestehende zweite Teilstrom 12 wird mittels einer Zuführtrommel 17 zu der als Axialrotor ausgeführten Abscheideeinrichtung 7 geleitet. In einer alternativen Ausführungsform kann die Abscheideeinrichtung 7 auch als Hordenschüttleranordnung ausgeführt sein. Ein im Wesentlichen aus einem Gemisch aus Körnern und Ährenbruchstücken sowie Kurzstroh bestehender Erntegutstrom wird von der Abscheideeinrichtung 7 abgeschieden und über einen sogenannten Rücklaufboden 19 und den Vorbereitungsboden 13 an die Siebanordnung 8 übergeben.

In der Siebanordnung 8 wird schließlich in an sich bekannter Weise ein gereinigter Körnerstrom 18 abgeschieden und über einen Auffang- und Führungsboden 20 einer Kornförderschnecke 21 zugeführt, von wo aus er mittels eines Elevators 22 in den Korntank 23 gefördert wird.

Erntegut 4, im Wesentlichen Halmgut, welches am rückwärtigen Ende der Abscheideeinrichtung 7 ausgeworfen wird, gelangt zu einer noch näher zu erläuternden Häckselvorrichtung 24 am Heck des Mähdreschers 1, von der es zerkleinert wird und im Anschluss durch eine der Häckselvorrichtung 20 prozesstechnisch nachgeordnete Verteileivorrichtung 25 auf den Boden eines Feldes ausgeworfen wird.

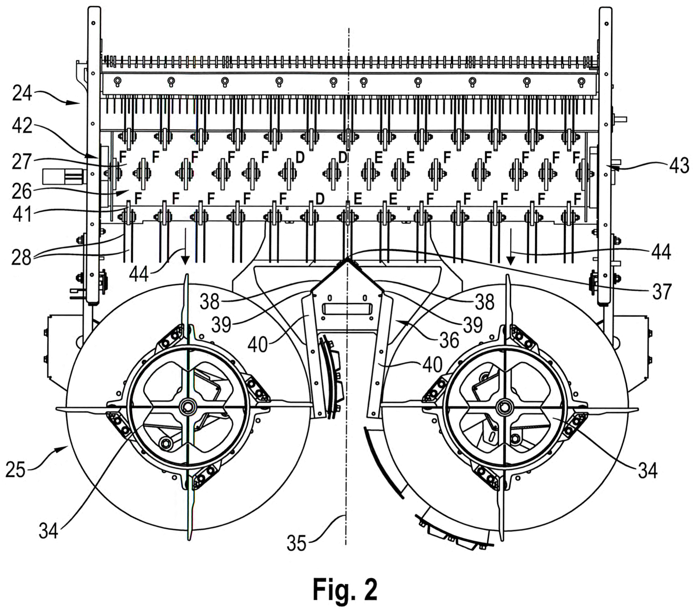

Die Häckselvorrichtung 24 umfasst eine im Betriebszustand rotierende Messertrommel 26. Wie Fig. 2 zeigt, sind auf dem Trommelmantel 27 der Messertrommel 26 eine Vielzahl von Häckselmessern 28 angeordnet. Die Häckselmesser 28 können feststehend oder pendelnd an der Messertrommel 26 befestigt sein.

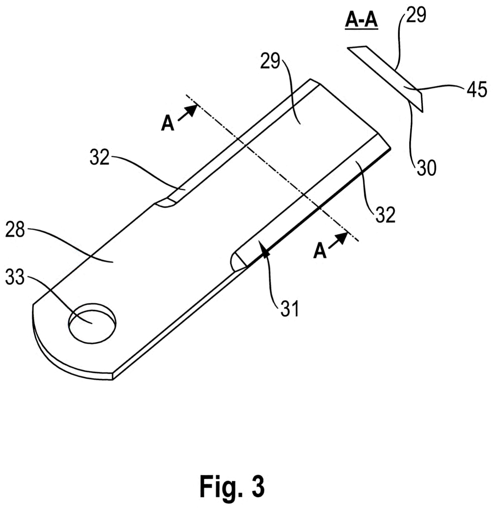

In Fig. 3 ist eines der Häckselmesser 28 detailliert dargestellt, wobei sämtliche Häckselmesser 28 als Gleichteile ausgebildet sind. Das Messer 28 umfasst eine obere und eine untere Hauptseite 29, 30. Lediglich an der oberen Hauptseite 29 ist das Messer 28 angeschliffen, sodass der Schneidbereich 31 des Messers 28 von einer einseitigen Schlifffläche 32 gebildet wird. Hier und vorzugsweise ist die obere Hauptseite 29 an sich gegenüberliegenden Enden angeschliffen. Wie in der Messerquerschnittsfläche A-A dargestellt, ergibt sich eine trapezförmige Querschnittsfläche 45 des Schneidbereichs 31. Dementsprechend ist das Messer 28 spiegelsymmetrisch zu einer senkrecht zu den Hauptseiten 29, 30 ausgebildeten Ebene. Im Ausführungsbeispiel erstreckt sich die Schlifffläche 32 etwa über die halbe Messerlänge. Es sei darauf hingewiesen, dass die Schlifffläche 32 ebenfalls über die gesamte Messerlänge ausgebildet sein kann. Zur Befestigung des Messers 28, beispielsweise mittels eines Bolzens oder einer Schraube, ist eine Bohrung 33 an dem Messer 28 vorgesehen.

Fig. 2 zeigt die noch näher zu erläuternde Anordnung der Häckselmesser 28. Weiterhin ist in Fig. 2 die der Häckselvorrichtung 24 nachgeordnete Verteilvorrichtung 25 schematisch dargestellt. Die Verteilvorrichtung 25 ist als ein sogenannter Radialverteiler ausgebildet, wobei die Verteilvorrichtung 25 zwei Rotoren 34 umfasst. Die Rotoren 34 sind beiderseits einer Längsmittelebene 35 des Mähdreschers 1 angeordnet und vorzugsweise spiegelsymmetrisch zueinander ausgebildet. Zwischen den beiden Rotoren 34 ist ein Mittenkeil 36 angeordnet. Der Mittenkeil 36 fungiert als ein Gutstromteiler, wobei der Mittenkeil 36 einen von der Häckselvorrichtung 24 der Verteilvorrichtung 25 zuzuführenden Häckselgutstrom 44 in zwei den Rotoren 34 zuzuführende Teilströme aufteilt. Der Mittenkeil 36 umfasst eine der Häckselvorrichtung 24 zugewandte Keilmitte 37 bzw. Keilspitze. Von der Keilmitte 37 erstrecken sich zwei divergierende Flanken 38 bis zu einem Wendepunkt 39. An den Wendepunkt 39 schließen sich nach hinten konvergierende Flanken 40 an.

Erfindungsgemäß sind die auf der Messertrommel 26 angeordneten Häckselmesser 28 in einem stromaufwärts des Häckselgutstroms 44 betrachteten, vor dem Mittenkeil 36 befindlichen Bereich, links von der Keilmittel 37 nach links fördernd und rechts von der Keilmitte 37 nach rechts fördernd ausgerichtet. Mit anderen Worten sind im Bereich vor dem Mittenkeil 36 die in Vorwärtsfahrtrichtung des Mähdreschers 1 betrachten links von der Längsmittelebene 35 befindlichen Häckselmesser 28 nach links fördernd ausgerichtet und rechts von der Längsmittelebene 35 befindlichen Häckselmesser 28 nach rechts fördernd ausgerichtet. Insbesondere sind die Häckselmesser 28 in dem vor dem Mittenkeil 36 befindlichen Bereich derart angeordnet, sodass die Schliffflächen 32 der jeweiligen Häckselmesser 28 von der Längsmittelebene 35 abgewandt ausgerichtet sind. Hierbei wird der Effekt genutzt, dass die angewinkelt zur Umfangsrichtung der Messertrommel 26 ausgebildeten Schliffflächen 29 das Erntegut in axialer Richtung der Messertrommel 26 ablenken. Die Längsmittelebene 35 schneidet die Keilmitte 37 und die Messertrommel 26 mittig.

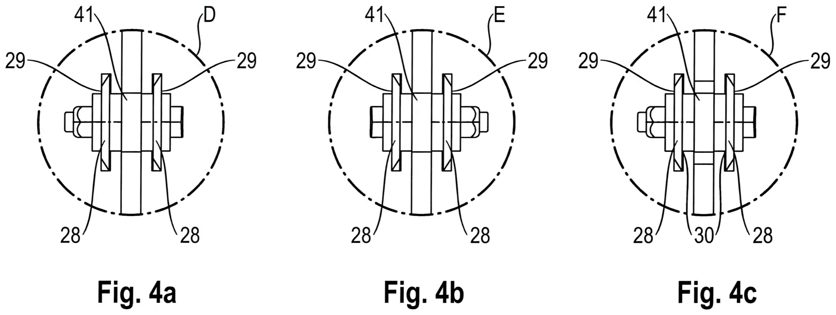

Auf dem Trommelmantel 27 der Messertrommel 26 befinden sich eine Vielzahl von Befestigungslaschen 41. Die Befestigungslaschen 41 haltern jeweils ein aus zwei Messern 28 bestehendes Messerpaar D, E, F, wobei die Häckselmesser 28 an einander gegenüberliegenden Seiten der Befestigungslaschen 41 angeordnet sind. Auf dem Trommelmantel 27 befinden sind nach links fördernde Messerpaare D, nach rechts fördernde Messerpaare E und neutral ausgerichtete Messerpaare F. Ein in Fig. 4a dargestelltes, nach links förderndes Messerpaar D umfasst zwei benachbarte Häckselmesser 28 mit jeweils einer oberen Hauptseite 29, die der linken Stirnseite 42 der Messertrommel 26 zugewandt ist. Ein in Fig. 4b dargestelltes, nach rechts förderndes Messerpaar E umfasst zwei benachbarte Häckselmesser 28 mit jeweils einer oberen Hauptseite 29, die der rechten Stirnseite 43 der Messertrommel 26 zugewandt ist. Weiterhin umfasst der Trommelmantel 27 neutral ausgerichtete Messerpaare F, wobei ein neutral ausgerichtetes Messerpaar F einander zugewandte untere Hauptseiten 30 aufweist, sodass die benachbarten Messer 8 eines neutral ausgerichteten Messerpaars F das Erntegut in entgegengesetzte Richtungen ablenken.

Gemäß dem Ausführungsbeispiel nach Fig. 2 sind die Häckselmesser 28 in sich in Längsrichtung der Messertrommel 26 erstreckenden Reihen angeordnet. In dem vor dem Mittenkeil 36 befindlichen Bereich umfassen die Reihen jeweils zumindest drei benachbarte Häckselmesser 28, die nach links fördernd ausgerichtet sind und jeweils zumindest drei benachbarte Häckselmesser 28, die nach rechts fördernd ausgerichtet sind. Hier und vorzugsweise sind in Rotationsrichtung der Messertrommel 26 betrachtet die Häckselmesser 28 aufeinander folgender Reihen alternierend zueinander angeordnet. Auf eine Reihe, die in dem vor dem Mittenkeil 36 befindlichen Bereich drei nach links und drei nach rechts fördernd ausgerichtete Häckselmesser 28 umfasst, folgt eine Reihe mit vier nach links und vier nach rechts fördernd ausgerichteten Häckselmessern 28.

Eine Reihe mit jeweils drei nach links und drei nach rechts fördernd ausgerichteten Häckselmessern 28 umfasst mittig ein neutral ausgerichtetes Messerpaar F, wobei die Längsmittelebene 35 zwischen den Beiden Häckselmessern des Messerpaars F verläuft. Linksseitig schließt sich ein nach links förderndes Messerpaar D und rechtsseitig ein nach rechts förderndes Messerpaar E an. Eine Reihe mit jeweils vier nach links und vier nach rechts fördernd ausgerichteten Häckselmessern 28 umfasst linksseitig der Längsmittelebene 35 zwei nach links fördernde Messerpaare D und rechtsseitig der Längsmittelebene 35 zwei nach rechts fördernd ausgerichtete Messerpaare E. Auf die drei bzw. vier jeweils nach links und nach rechts fördernd ausgerichteten Messer 28 einer Reihe folgen bis zu der jeweiligen nächstgelegenen Stirnseite 42, 43 neutral ausgerichtete Messerpaare F, sodass in einem stromaufwärts des Häckselgutstroms 44 betrachten, vor den Rotoren befindlichen Bereich die benachbarten Häckselmesser 28 alternierend zueinander angeordnet sind, wobei benachbarte Häckselmesser 28 in entgegengesetzte Richtungen fördernd ausgerichtet sind.

### Bezugszeichenliste:

| | | | |
|---|---|---|---|
| 1 | Mähdrescher | 34 | Rotor |
| 2 | Maschinengehäuse | 35 | Längsmittelebene |
| 3 | Vorsatzgerät | 36 | Mittenkeil |
| 4 | Erntegut | 37 | Keilmitte |
| 5 | Schrägförderer | 38 | Flanke |
| 6 | Dreschvorrichtung | 39 | Wendepunkt |
| 7 | Abscheideeinrichtung | 40 | Flanke |
| 8 | Siebanordnung | 41 | Befestigungslasche |
| 9 | Dreschtrommel | 42 | Linke Stirnseite |
| 10 | Dreschkorb | 43 | Rechte Stirnseite |
| 11 | Teilstrom | 44 | Häckselgutstrom |
| 12 | Teilstrom | 45 | Querschnittsfläche |
| 13 | Vorbereitungsboden | D | Messerpaar |
| 14 | Obersieb | E | Messerpaar |
| 15 | Untersieb | F | Messerpaar |
| 16 | Reinigungsgebläse | | |
| 17 | Zuführtrommel | | |
| 18 | Körnerstrom | | |
| 19 | Rücklaufboden | | |
| 20 | Auffang- und Führungsboden | | |
| 21 | Kornförderschnecke | | |
| 22 | Elevator | | |
| 23 | Korntank | | |
| 24 | Häckselvorrichtung | | |
| 25 | Verteilvorrichtung | | |
| 26 | Messertrommel | | |
| 27 | Trommelmantel | | |
| 28 | Häckselmesser | | |
| 29 | Obere Hauptseite | | |
| 30 | Untere Hauptseite | | |
| 31 | Schneidbereich | | |
| 32 | Schlifffläche | | |
| 33 | Bohrung | | |

## Patentansprüche

1. Selbstfahrender Mähdrescher (1), umfassend eine Häckselvorrichtung (24) mit einer rotierenden Messertrommel (26) und eine der Häckselvorrichtung (24) nachgeordnete Verteilvorrichtung (25), wobei die Verteilvorrichtung (25) einen Mittenkeil (36) zur Aufteilung eines aus der Häckselvorrichtung (24) austretenden Häckselgutstroms (44) in zwei Teilströme umfasst und die Messertrommel (26) einseitig geschliffene Häckselmesser (28) aufweist, **dadurch gekennzeichnet, dass** in einem vor dem Mittenkeil (36) befindlichen Bereich die links von der Keilmitte (37) befindlichen Häckselmesser (28) nach links fördernd und die rechts von der Keilmitte (37) befindlichen Häckselmesser (28) nach rechts fördernd ausgerichtet sind.

2. Selbstfahrender Mähdrescher (1) nach Anspruch 1, **dadurch gekennzeichnet, dass** die auf der Messertrommel (26) angeordneten Häckselmesser (28) in sich in Längsrichtung der Messertrommel (26) erstreckenden Reihen angeordnet sind, wobei in dem vor dem Mittenkeil (36) befindlichen Bereich die Reihen jeweils zumindest zwei, vorzugsweise zumindest drei benachbarte Häckselmesser (28) umfassen, die nach links fördernd ausgerichtet sind und jeweils zumindest zwei, vorzugsweise zumindest drei benachbarte Häckselmesser (28) umfassen, die nach rechts fördernd ausgerichtet sind.

3. Selbstfahrender Mähdrescher (1) nach Anspruch 2, **dadurch gekennzeichnet, dass** in Rotationsrichtung der Messertrommel (26) betrachtet die Häckselmesser (28) aufeinander folgender Reihen alternierend zueinander angeordnet sind, wobei auf eine Reihe, die in dem vor dem Mittenkeil (36) befindlichen Bereich zumindest zwei, vorzugsweise zumindest drei nach links und zumindest zwei, vorzugsweise zumindest drei nach rechts fördernd ausgerichtete Häckselmesser (28) umfasst, eine Reihe mit zumindest drei, vorzugsweise zumindest vier nach links und/oder zumindest drei, vorzugsweise zumindest vier nach rechts fördernd ausgerichteten Häckselmessern (28) folgt.

4. Selbstfahrender Mähdrescher (1) nach einem der Ansprüche 1 bis 3, **dadurch gekennzeichnet, dass** die Verteilvorrichtung (25) zwei Rotoren (34) umfasst, wobei der Mittenkeil (36) zwischen den Rotoren (34) angeordnet ist.

5. Selbstfahrender Mähdrescher (1) nach Anspruch 4, **dadurch gekennzeichnet, dass** die vor den Rotoren (34) befindlichen Häckselmesser (28) der jeweiligen Reihen alternierend zueinander angeordnet sind, so dass benachbarte Häckselmesser (28) in entgegengesetzte Richtungen fördernd ausgerichtet sind.

6. Selbstfahrender Mähdrescher (1) nach Anspruch 5, **dadurch gekennzeichnet, dass** die vor dem Rotor (34) befindlichen, alternierend zueinander angeordneten Häckselmesser (28) ausgehend von den zumindest zwei, vorzugsweise zumindest drei links fördernd ausgerichteten Häckselmessern (28) bis hin zu einer linken Stirnseite (42) angeordnet sind und von den zumindest zwei, vorzugsweise zumindest drei rechts fördernd ausgerichteten Häckselmessern (28) bis hin zu einer rechten Stirnseite (43) der Messertrommel (26) angeordnet sind.

7. Selbstfahrender Mähdrescher (1) nach einem der Ansprüche 1 bis 6, **dadurch gekennzeichnet, dass** die Messertrommel (26) eine Vielzahl von Befestigungslaschen (41) umfasst, wobei die Häckselmesser (28) jeweils paarweise an einer Befestigungslasche (41) angeordnet sind.

8. Selbstfahrender Mähdrescher (1) nach einem der Ansprüche 1 bis 7, **dadurch gekennzeichnet, dass** die Häckselmesser (28) spiegelsymmetrisch ausgebildet sind, wobei die Häckselmesser (28) vorzugsweise einen trapezförmige Querschnittsfläche (45) aufweisen.
